# FASCICULE DE BREVET EUROPEEN

(11) **EP 4 218 121 B1**
(45) Date de publication et mention de la délivrance du brevet: **30.04.2025**
(21) Numéro de dépôt: 21782683.3
(22) Date de dépôt: 21.09.2021
(51) Int. Cl.: H02K 11/225, H02K 11/215, H02K 29/08, H02K 3/26, H02K 41/03, H02K 1/27

(54) **MACHINE ÉLECTRIQUE À N PHASES**
N-PHASIGE ELEKTRISCHE MASCHINE
N-PHASE ELECTRIC MACHINE

(30) Priorité: 22.09.2020 FR 2009601
(43) Date de publication de la demande: 02.08.2023
(73) Titulaire: NTN Europe, 74000 Annecy (FR)
(72) Inventeur: BOISSIERE, Kevin, 74000 Annecy (FR); BELLEMIN NOEL, Quentin, 73470 Ayn (FR)
(74) Mandataire: Sayettat, Julien Christian
(86) Numéro de dépôt international: PCT/EP2021/075933
(87) Numéro de publication internationale: WO 2022/063772

(56) Documents cités:
- WO-A1-2018/117629
- FR-A1- 2 904 412
- JP-A- 2007 189 841
- JP-B2- 4 150 133
- US-A- 4 509 001
- US-A- 5 828 195
- US-A1- 2010 259 112

## Description

L'invention concerne une machine électrique à N phases comprenant un organe mobile monté en déplacement par rapport à un organe fixe, un système de détermination d'au moins une information relative au déplacement dudit organe mobile et un système d'alimentation électrique qui est géré par ladite information.

Dans une application particulière, la machine est alimentée en électricité pour actionner l'entraînement en déplacement de l'organe mobile, par exemple dans le but de motoriser un dispositif appartenant à une unité d'aide à la conduite d'un véhicule automobile. Dans une autre application, la machine génère de l'électricité par déplacement de l'organe mobile afin de pouvoir alimenter le système.

En particulier, on connaît des machines électriques de type moteur électrique synchrone à aimant permanent dans lesquelles l'organe fixe présente une armature en matériau ferromagnétique qui est équipée d'au moins une bobine conductrice par phase, l'organe mobile étant solidaire en déplacement d'au moins un aimant permanent par phase.

Dans ce type de machine électrique, on peut souhaiter connaître en temps réel et avec une fiabilité optimale au moins une information relative au déplacement de l'organe mobile, par exemple un paramètre tel que sa position, sa vitesse, son accélération ou son sens de déplacement, notamment afin de pouvoir piloter l'alimentation électrique d'une machine motrice et/ou contrôler l'électricité fournie par une machine génératrice.

Pour ce faire, on connaît des machines électriques équipées d'un système de détermination comprenant un codeur solidaire de l'organe mobile qui est apte à générer un signal représentatif de son déplacement, et un capteur solidaire de l'organe fixe qui est apte à déterminer ladite information par lecture du signal généré par ledit codeur.

Le document JP-4 150 133 B2 décrit une machine électrique tournante dont le pilotage est assuré de manière stable via un nombre de pôles de stators pour des capteurs qui est égal au nombre de phases de ladite machine ou à un multiple dudit nombre de phases, lesdits pôles étant disposés de manière centripète, à des pas égaux depuis la surface intérieure d'une substance magnétique annulaire destinée à être associée à un stator, des capteurs étant montés sur des positions déterminées par lesdits pôles.

Le document JP-2007/189841 A décrit un moteur sans balai comprenant un stator pourvu d'une pluralité de dents sur lesquelles des bobines sont enroulées via des isolants, ainsi qu'un rotor pourvu d'aimants multipolaires faisant face auxdites dents en formant entre eux un espace magnétique, des capteurs magnétiques étant disposés sur ledit stator en faisant face auxdits aimants.

Le document US-2010/0259112 A1 décrit une machine électrique comprenant un moteur modulaire comprenant des bobines qui ont une différence de phase électrique de 180°, de sorte à raccourcir le trajet du flux magnétique, et ainsi réduire la taille de ladite machine, en atténuant le déséquilibre de la force contre-électromotrice.

Le document WO-2018/117629 A1 décrit un stator, destiné notamment à être utilisé dans un moteur ou un ventilateur d'un système de purification d'air, ledit stator comprenant notamment un substrat multicouches pourvu d'une pluralité de premiers trous traversants et d'une pluralité de motifs de bobines dessinés en spirale en encerclant respectivement un desdits premiers trous, une culasse de stator étant disposée au niveau de la partie inférieure dudit substrat, ledit substrat comprenant en outre une pluralité de seconds trous traversants disposés relativement aux premiers trous, une pluralité de noyaux comprenant chacun un côté faisant saillie sur les motifs de bobines formés sur la couche supérieure dudit substrat, leur autre côté étant couplé à un second trou au travers du premier trou correspondant.

Selon une réalisation permettant une résolution optimale de l'information déterminée, le codeur présente une piste magnétique formée d'une succession de paires de pôles magnétiques Nord et Sud qui sont disposées pour délivrer un champ magnétique pseudo sinusoïdal, le capteur comprenant au moins deux éléments sensibles disposés à distance de lecture de la piste magnétique du codeur.

Toutefois, un tel codeur étant dissocié des aimants de la machine électrique, une bonne gestion du système d'alimentation par l'information déterminée nécessite une indexation de l'organe mobile de la machine, notamment en alignant la mesure de la position électrique du capteur au passage à zéro du champ magnétique de ladite machine ou en déterminant la différence d'angle entre ces deux positions.

En outre, le déplacement de la machine électrique et la détermination de l'information de déplacement étant alors deux fonctions distinctes, les solutions connues nécessitent d'avoir deux jeux de pièces séparées, ce qui nuit à leur compacité.

L'invention vise à résoudre les problèmes de l'art antérieur en proposant notamment une machine électrique dans laquelle les fonctions d'alimentation électrique et de détermination d'au moins une information relative au déplacement de l'organe mobile sont réalisées conjointement, notamment afin d'éviter une indexation de l'organe mobile avec le codeur permettant ladite détermination.

A cet effet, l'invention propose une machine électrique à N phases comprenant un organe mobile monté en déplacement par rapport à un organe fixe, un système de détermination d'au moins une information relative au déplacement dudit organe mobile et un système d'alimentation électrique qui est géré par ladite information, ledit système de détermination comprenant un codeur solidaire de l'organe mobile qui est apte à générer un signal représentatif de son déplacement et un capteur solidaire de l'organe fixe qui est apte à déterminer ladite information par lecture du signal généré par ledit codeur, ledit codeur présentant une piste magnétique formée d'une succession de nₚₚ paires de pôles magnétiques Nord et Sud de largeur Lₚ qui sont disposées pour délivrer un champ magnétique pseudo sinusoïdal, l'organe fixe présentant une armature en matériau ferromagnétique qui est équipée d'au moins une bobine conductrice par phase, lesdites bobines étant reliées électriquement au système d'alimentation en étant couplées magnétiquement à la piste du codeur, l'armature présentant des plots autour desquels respectivement une bobine est disposée, lesdits plots saillants dans l'interface avec le codeur en présentant chacun une surface libre disposée en regard de la piste magnétique, ladite surface libre présentant des dents de largeur L_{d} espacées par des creux de largeur Lₑ, les largeurs L_{d} et/ou Lₑ étant telles que leur rapport à N.Lₚ n'est pas pair ni inverse pair afin de diriger le flux magnétique entre la bobine et le codeur pour que l'alimentation électrique des bobines induise le déplacement du codeur et/ou que le déplacement du codeur induise l'alimentation électrique desdites bobines, ladite machine comprenant un empilement axial d'un circuit imprimé sur l'armature pour former un stator, le codeur formant un rotor étant disposé axialement au-dessus dudit circuit imprimé pour former une machine à flux magnétique axial dans laquelle le capteur lit axialement l'information délivrée par ledit codeur.

D'autres particularités et avantages de l'invention apparaîtront dans la description qui suit, faite en référence aux figures jointes, dans lesquelles :
- les figures 1a et 1b sont des représentations schématiques éclatées de composants d'une machine électrique selon un mode de réalisation de l'invention ;
- la figure 2 est une représentation schématique de dessus de composants de la machine électrique selon les figures 1a et 1b ;
- les figures 3a et 3b illustrent des bobines pour une machine électrique, selon respectivement une réalisation de l'invention ;
- la figure 4 représente la disposition du codeur par rapport à l'armature dans une machine électrique selon l'invention.

En relation avec ces figures, on décrit une machine électrique à N phases comprenant un organe mobile 1 monté en déplacement par rapport à un organe fixe, N étant un entier supérieur à 1, notamment en relation avec un machine électrique biphasée ou triphasée.

Selon une application, la machine est alimentée en électricité pour actionner l'entraînement en déplacement de l'organe mobile 1, par exemple dans le but de motoriser un dispositif appartenant à une unité d'aide à la conduite d'un véhicule automobile. En particulier, la machine électrique peut constituer un moteur synchrone à aimant permanent. Dans une autre application, la machine génère de l'électricité par déplacement de l'organe mobile 1.

La machine électrique comprend un système d'alimentation électrique 2 qui est géré pour :
- dans le cas d'une machine motrice, pouvoir piloter le déplacement de l'organe mobile 1, notamment en relation avec le couple et la vitesse de déplacement ; et/ou
- dans le cas d'une machine génératrice, contrôler son alimentation électrique, notamment en relation avec la fréquence de la tension électrique générée.

Pour ce faire, la machine électrique comprend un système de détermination d'au moins une information relative au déplacement de l'organe mobile 1, notamment agencé pour délivrer une information relative à la position dudit organe mobile, ladite information étant utilisée par le système d'alimentation 2 pour sa gestion. L'information déterminée peut aussi être relative à la vitesse, à l'accélération et/ou au sens de déplacement de l'organe mobile 1.

Le système de détermination comprend un codeur 3 solidaire en déplacement de l'organe mobile 1, ledit codeur étant apte à générer un signal représentatif de son déplacement, et un capteur 4 solidaire de l'organe fixe qui est apte à déterminer l'information par lecture du signal généré par ledit codeur.

Selon une réalisation permettant une résolution optimale de l'information déterminée, le codeur 3 présente une piste magnétique 5 formée d'une succession de nₚₚ paires de pôles magnétiques 6 Nord et Sud de largeur Lₚ qui sont disposées pour délivrer un champ magnétique pseudo sinusoïdal, le capteur 4 comprenant au moins deux éléments sensibles disposés à distance de lecture de la piste magnétique 5 du codeur 3.

Selon une réalisation connue notamment du document EP-1 403 622, le codeur 3 peut présenter une piste magnétique secondaire permettant en particulier de déterminer une information de position absolue. En particulier, le caractère bi-piste du codeur permet de générer une pulse de référence par paire de pôles d'un moteur, ce qui permet de le piloter plus facilement.

A titre d'exemple, le codeur 3 est formé d'un aimant sur lequel les pôles magnétiques 6 sont constitués, notamment en formant au moins une piste aimantée 5. En particulier, l'aimant peut comprendre une matrice, par exemple réalisée à base d'un matériau plastique ou élastomère, dans laquelle sont dispersées des particules magnétiques, notamment des particules de ferrite ou de terres rares comme le NdFeB, qui sont aimantées suivant la succession de pôles 6.

De façon avantageuse relativement à la résolution de l'information délivrée, la largeur Lₚ de chacun des pôles magnétiques 6 du codeur 3 est comprise entre 0,5 et 20 mm, le nombre nₚₚ de paires de pôles magnétiques 6 du codeur 3 pouvant être au moins égal à 2, notamment en étant supérieur à 6. Dans le mode de réalisation représenté, 36 paires de pôles 6 Nord et Sud constituent la piste magnétique 5 du codeur 3.

Les éléments sensibles du capteur 4 sont aptes à émettre chacun un signal qui est fonction du champ délivré par la piste 5, le système de détermination comprenant :
- un dispositif de traitement des signaux émis par les éléments sensibles qui est agencé pour fournir deux signaux en quadrature et de même amplitude qui sont chacun représentatifs du champ magnétique ; et
- à partir desdits signaux en quadrature, un dispositif de calcul de l'information relative au déplacement de l'organe mobile.

Selon une réalisation, le document WO-2006/064169 décrit un capteur 4 agencé pour délivrer deux signaux respectivement SIN et COS en quadrature et de même amplitude qui sont chacun représentatifs du champ magnétique délivré par la piste 5.

En particulier, le capteur 4 peut comprendre au moins un élément sensible, notamment choisi parmi les sondes magnétosensibles, par exemple à effet Hall, et/ou les sondes à base de magnétorésistances à effet tunnel (TMR), de magnétorésistances anisotropes (AMR) ou de magnétorésistances géantes (GMR).

Par ailleurs, le dispositif de calcul peut comprendre des moyens d'interpolation permettant d'augmenter la résolution de l'information relative au déplacement du codeur 3.

L'organe fixe présente une armature 7 en matériau ferromagnétique présentant des plots 8, lesdits plots saillants dans l'interface avec le codeur 3 en présentant chacun une surface libre disposée en regard de la piste magnétique 5. En particulier, les plots 8 sont réalisés en une pièce ferromagnétique avec l'armature 7. La distance d'entrefer entre la surface libre des plots 8 et la piste 5 du codeur 3 est de l'ordre de 1 mm au maximum pour un aimant à base de ferrite et peut aller jusqu'à 10 mm pour un aimant à base de terres rares.

L'armature 7 est équipée d'au moins une bobine conductrice 9 par phase qui est disposée autour d'un plot 8, lesdites bobines étant reliées électriquement au système d'alimentation 2 en étant couplées magnétiquement à la piste 5 du codeur 3. Ainsi, le codeur 3 est utilisé en tant qu'aimant permanent pour le fonctionnement de la machine électrique, notamment en délivrant un flux magnétique, ce qui permet de combiner avec le même moyen la réalisation des fonctions d'alimentation électrique et de détermination d'au moins une information relative au déplacement de l'organe mobile 1. En outre, lorsque le codeur 3 présente une piste magnétique secondaire, celle-ci participe également au fonctionnement de la machine.

Une bobine 9 et un plot 8 par phase électrique peut être prévus. Selon une autre réalisation, plusieurs ensembles bobine 9 - plot 8 par phase électrique peuvent être prévus.

Selon la réalisation représentée, le codeur 3 présente une piste magnétique 5 annulaire qui est solidaire d'un organe mobile 1 monté en rotation. En particulier, les bobines 9 des phases peuvent être réparties angulairement de façon alternée autour de la piste 5 du codeur 3 en étant reliées électriquement en série et/ou en parallèle. De façon avantageuse, les centres géométriques des bobines 9 d'une phase sont espacés angulairement d'un multiple entier d'un angle de l'ordre de 360°/N.nₚₚ.

Dans le mode de réalisation représenté, la machine électrique présente deux phases et deux ensembles bobine 9 - plot 8 par phase, les bobines 9 d'une phase étant disposées à sensiblement 180° l'une de l'autre.

Pour permettre le fonctionnement de la machine électrique avec une gestion standard du système d'alimentation 2, le centre géométrique d'une bobine 9 d'une phase est espacé angulairement du centre géométrique d'une bobine 9 d'une autre phase d'un multiple entier d'un angle compris entre :
90°/N.nₚₚ et 270°/N.nₚₚ pour N=2 ; et
270°/N.nₚₚ et 450°/N.nₚₚ pour N>2.

En particulier, le centre géométrique d'une bobine 9 d'une phase est espacé angulairement du centre géométrique d'une bobine 9 d'une autre phase d'un multiple entier d'un angle compris entre :
135°/N.nₚₚ et 225°/N.nₚₚ pour N=2 ; et
315°/N.nₚₚ et 405°/N.nₚₚ pour N>2.

Selon une réalisation, le centre géométrique d'une bobine 9 d'une phase est espacé angulairement du centre géométrique d'une bobine 9 d'une autre phase d'un multiple entier d'un angle de l'ordre de 180°/N.nₚₚ pour N= 2 et 360°/N.nₚₚ pour N> 2, avec une tolérance d'angle de +/- 50%.

Dans le mode de réalisation représenté, les bobines 9 de respectivement une phase sont disposées à environ 90°, plus précisément à 82,5°, l'une de l'autre pour former autour de la piste magnétique 5 une succession alternée d'une bobine 9 d'une première phase, d'une bobine 9 de l'autre phase, d'une bobine 9 de la première phase, d'une bobine 9 de l'autre phase.

Selon une autre réalisation, le codeur 3 présente une piste magnétique 5 linéaire qui est solidaire d'un organe mobile 1 monté en translation, la bobine 9 d'une phase présentant un centre géométrique qui est espacé linéairement du centre géométrique d'une bobine 9 d'une autre phase d'un multiple entier d'une distance comprise entre :
0,5.Lₚ/N.2nₚₚ et 1,5.Lₚ/N.2nₚₚ pour N=2 ; et
Lₚ/N.n_{PP} et 3Lₚ/N.nₚₚ pour N>2.

En particulier, le centre géométrique d'une bobine 9 d'une phase est espacé linéairement du centre géométrique d'une bobine 9 d'une autre phase d'un multiple entier d'une distance comprise entre :
0,75.Lₚ/N.2nₚₚ et 1,25.Lₚ/N.2nₚₚ , notamment en étant de l'ordre de Lₚ/N.2nₚₚ pour N=2 ; et
1,5Lₚ/N.nₚₚ et 2,5Lₚ/N.nₚₚ, notamment en étant de l'ordre de 2Lₚ/N.nₚₚ pour N>2.

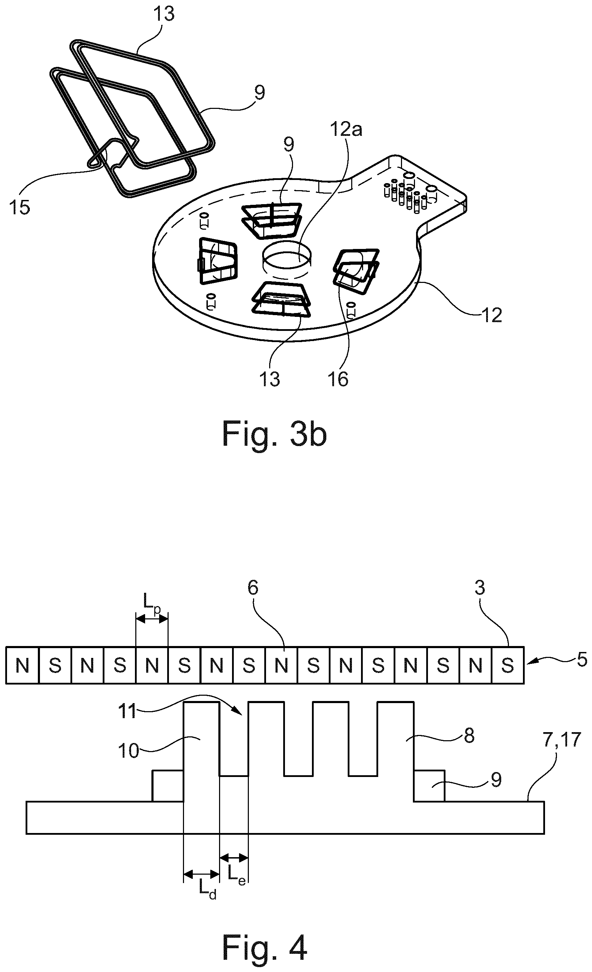

En relation avec la figure 4, la surface libre de chacun des plots 8 présente des dents 10 de largeur L_{d} espacées par des creux 11 de largeur Lₑ, les largeurs L_{d} et/ou Lₑ étant telles que leur rapport à N.Lₚ n'est pas pair ni inverse pair (c'est-à-dire que le rapport Lₑ/N.Lₚₚ ou L_{d}/N.Lₚₚ n'est pas égal à 2, 4 ... ou à ½, ¼, ...) afin de diriger le flux magnétique entre la bobine 9 et le codeur 3 pour que l'alimentation électrique des bobines 9 induise le déplacement du codeur 3 et/ou que le déplacement du codeur 3 induise l'alimentation électrique desdites bobines.

En particulier, les dents 10 canalisent le flux magnétique successivement en regard des pôles 6 de même polarité, ce qui crée un effort de déplacement relatif entre l'armature 7 et le codeur 3 solidaire de l'organe mobile 1, ledit effort induisant le déplacement dudit organe mobile dans une machine motrice ou un courant électrique dans les bobines 9 d'une machine génératrice.

Ainsi, grâce à la présence de ces ensembles dents 10 - creux 11, on augmente la densité de flux magnétique utile au fonctionnement de la machine électrique, afin de pouvoir utiliser des pôles magnétiques 6 de largeur Lₚ suffisamment réduite pour la résolution de l'information de déplacement déterminée, et ce sans nécessiter d'indexation mécanique puisque le fonctionnement magnétique de la machine est conféré par le codeur 3 qui permet la détermination de ladite information.

De façon avantageuse, la largeur L_{d} des dents 10 est analogue à la largeur Lₑ des creux 11. Par ailleurs, le rapport de la largeur L_{d} des dents 10 et/ou de la largeur Lₑ des creux 11 à N.Lₚ peut être, à une tolérance de fabrication de +/-40%, unitaire ou fractionnaire.

Pour limiter la formation d'un couple contraire à celui du déplacement de l'organe mobile 1, la profondeur des creux 11 doit être la plus grande possible, notamment en étant supérieure ou égale à la largeur L_{d} des dents 10. Pour tenir compte des contraintes de fabrication, la profondeur des creux 11 peut être de l'ordre de grandeur de la largeur L_{d} des dents 10.

Selon une réalisation avantageuse, les bobines 9 sont formées chacune de plusieurs couches d'un circuit imprimé 12 comportant au moins une spire conductrice 13, lesdites spires étant connectées entre elles pour former les bobines 9. Ainsi, les bobines 9 présentent une épaisseur réduite qui est favorable à la compacité de la machine, notamment par rapport à un bobinage conventionnel avec un fil de cuivre d'une machine de puissance équivalente. En outre, on obtient une grande robustesse du bobinage et une réalisation simplifiée en comparaison du besoin d'une machine spéciale de bobinage des fils de cuivre.

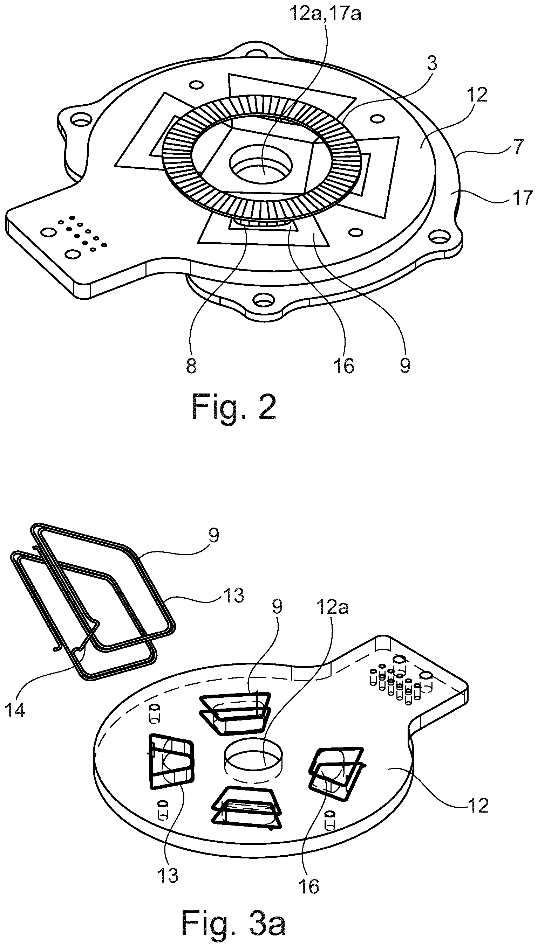

En particulier, vingt couches 12 de douze spires 13 chacune peuvent être mises en œuvre. La figure 3a schématise deux couches 12 de deux spires 13 formant une bobine 9 comprenant une connexion 14 en série des spires 13 entre elles. La figure 3b représente deux couches 12 de deux spires 13 formant une bobine 9 comprenant des connexions 15 en parallèle des spires 13 entre elles.

De façon avantageuse, le système de détermination ainsi que le système de pilotage de l'organe mobile 1 et/ou de contrôle de l'alimentation électrique peuvent être intégrés sur le circuit imprimé 12 du stator de la machine, ce qui permet de gagner grandement en encombrement et d'éliminer les besoins en connectique vers un système de pilotage externe.

En relation avec les figures, le circuit imprimé 12 présente des ouvertures 16 dans lesquelles respectivement un plot 8 est disposé. En particulier, l'armature 7 présente une plaque 17 sur la surface de laquelle les plots 8 sont formés, les bobines 9 étant disposées respectivement autour d'un plot 8, notamment en prévoyant que les plots 8 s'étendent chacun au centre d'une bobine 9.

Cette réalisation permet un empilement axial compact du circuit imprimé 12 sur l'armature 7 pour former le stator de la machine, le codeur 3 formant rotor étant disposé axialement au-dessus dudit circuit imprimé pour former une machine à flux magnétique axial dans laquelle le capteur 4 lit axialement l'information délivrée par ledit codeur.

En particulier, un codeur 3 avec une piste magnétique 5 axiale est plus simple à fabriquer que son équivalent à lecture radiale. De façon avantageuse, le codeur 3 est réalisé en élasto ou plasto-ferrite, ce qui permet d'avoir une grande souplesse pour choisir rapidement le nombre de paires de pôles 6 en fonction de l'application.

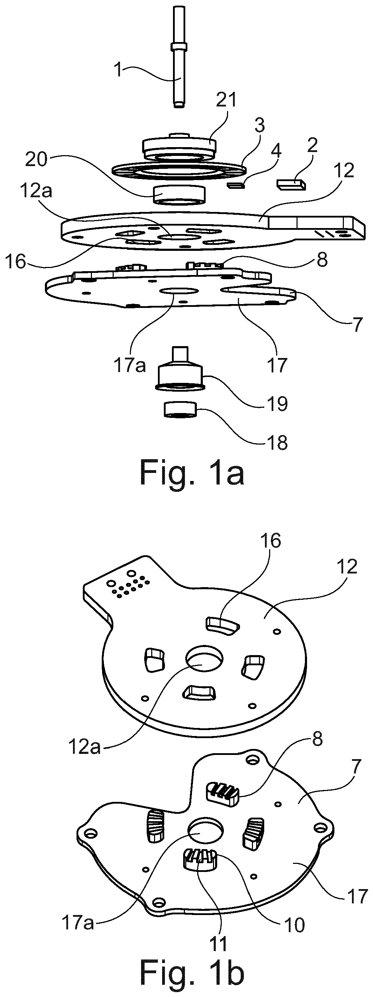

Par ailleurs, la figure 1 représente le montage de l'organe mobile 1 en rotation au travers d'ouvertures 17a, 12a de respectivement la plaque 17 et du circuit imprimé 12, au moyen de deux roulements, respectivement un roulement inférieur 18 porté par une cloche d'intégration 19 et un roulement supérieur 20 monté dans un porte codeur 21.

De façon avantageuse, le capteur 4 et les bobines 9 sont implantés sur la surface d'un support commun, notamment formé par le circuit imprimé 12, de sorte à définir la position relative entre les éléments sensibles dudit capteur et lesdites bobines. En particulier, le capteur 4 et les bobines 9 peuvent être disposés dans un même plan parallèlement à la surface du codeur 3, afin notamment de faciliter la réalisation du circuit imprimé 12.

Selon une réalisation, le rotor de la machine peut comprendre un empilement de multiples codeurs 3, le stator pouvant comprendre de multiples bobinages sur le circuit imprimé 12 afin d'augmenter le couple délivré.

## Revendications

1. Machine électrique à N phases comprenant un organe mobile (1) monté en déplacement par rapport à un organe fixe, un système de détermination d'au moins une information relative au déplacement dudit organe mobile et un système d'alimentation électrique (2) qui est géré par ladite information, ledit système de détermination comprenant un codeur (3) solidaire de l'organe mobile (1) qui est apte à générer un signal représentatif de son déplacement et un capteur (4) solidaire de l'organe fixe qui est apte à déterminer ladite information par lecture du signal généré par ledit codeur, ledit codeur présentant une piste magnétique (5) formée d'une succession de nₚₚ paires de pôles magnétiques (6) Nord et Sud de largeur Lₚ qui sont disposées pour délivrer un champ magnétique pseudo sinusoïdal, l'organe fixe présentant une armature (7) en matériau ferromagnétique qui est équipée d'au moins une bobine conductrice (9) par phase, lesdites bobines étant reliées électriquement au système d'alimentation (2) en étant couplées magnétiquement à la piste (5) du codeur (3), l'armature (7) présentant des plots (8) autour desquels respectivement une bobine (9) est disposée, les plots étant saillants dans l'interface avec le codeur (3) en présentant chacun une surface libre disposée en regard de la piste magnétique (5), ladite surface libre présentant des dents (10) de largeur L_{d} espacées par des creux (11) de largeur Lₑ, les largeurs L_{d} et/ou Lₑ étant telles que leur rapport à N.Lₚ n'est pas pair ni inverse pair afin de diriger le flux magnétique entre la bobine (9) et le codeur (3) pour que l'alimentation électrique des bobines (9) induise le déplacement du codeur (3) et/ou que le déplacement du codeur (3) induise l'alimentation électrique desdites bobines, ladite machine comprenant un empilement axial d'un circuit imprimé (12) sur l'armature (7) pour former un stator, le codeur (3) formant un rotor étant disposé axialement au-dessus dudit circuit imprimé pour former une machine à flux magnétique axial dans laquelle le capteur (4) lit axialement l'information délivrée par ledit codeur.

2. Machine électrique selon la revendication 1, **caractérisée en ce que** le codeur (3) présente une piste magnétique (5) annulaire qui est solidaire d'un organe mobile (1) monté en rotation, la bobine (9) d'une phase présentant un centre géométrique qui est espacé angulairement du centre géométrique d'une bobine (9) d'une autre phase d'un multiple entier d'un angle compris entre :
90°/N.nₚₚ et 270°/N.nₚₚ pour N=2 ; et
270°/N.nₚₚ et 450°/N.nₚₚ pour N>2.

3. Machine électrique selon la revendication 2, **caractérisée en ce que** le centre géométrique d'une bobine (9) d'une phase est espacé angulairement du centre géométrique d'une bobine (9) d'une autre phase d'un multiple entier d'un angle compris entre :
135°/N.nₚₚ et 225°/N.nₚₚ, notamment en étant de l'ordre de 180°/N.nₚₚ, pour N=2 ; et
315°/N.nₚₚ et 405°/N.nₚₚ, notamment en étant de l'ordre de 360°/N.nₚₚ, pour N>2.

4. Machine électrique selon la revendication 1, **caractérisée en ce que** le codeur (3) présente une piste magnétique (5) linéaire qui est solidaire d'un organe mobile (1) monté en translation, la bobine (9) d'une phase présentant un centre géométrique qui est espacé linéairement du centre géométrique d'une bobine (9) d'une autre phase d'un multiple entier d'une distance comprise entre :
0,5.Lₚ/N.2nₚₚ et 1,5.Lₚ/N.2nₚₚ pour N=2 ; et
Lₚ/N.nₚₚ et 3Lₚ/N.nₚₚ pour N>2.

5. Machine électrique selon la revendication 4, **caractérisée en ce que** le centre géométrique d'une bobine (9) d'une phase est espacé linéairement du centre géométrique d'une bobine (9) d'une autre phase d'un multiple entier d'une distance comprise entre :
0,75.Lₚ/N.2nₚₚ et 1,25.Lₚ/N.2nₚₚ , notamment en étant de l'ordre de Lₚ/N.2nₚₚ pour N=2 ; et
1,5Lₚ/N.nₚₚ et 2,5Lₚ/N.nₚₚ, notamment en étant de l'ordre de 2Lₚ/N.nₚₚ pour N>2.

6. Machine électrique selon l'une quelconque des revendications 1 à 5, **caractérisée en ce que** la largeur Lₚ de chacun des pôles magnétiques (6) du codeur (3) est comprise entre 0,5 et 20 mm.

7. Machine électrique selon l'une quelconque des revendications 1 à 6, **caractérisée en ce que** le nombre nₚₚ de paires de pôles magnétiques (6) du codeur (3) est au moins égal à 2, notamment en étant supérieur à 6.

8. Machine électrique selon l'une quelconque des revendications 1 à 7, **caractérisée en ce que** le capteur (4) comprend au moins deux éléments sensibles disposés à distance de lecture de la piste magnétique (5) du codeur (3), lesdits éléments étant aptes à émettre chacun un signal qui est fonction du champ délivré par ladite piste, le système de détermination comprenant :
- un dispositif de traitement des signaux émis par les éléments sensibles qui est agencé pour fournir deux signaux en quadrature et de même amplitude qui sont chacun représentatifs du champ magnétique ; et
- à partir desdits signaux en quadrature, un dispositif de calcul de l'information relative au déplacement de l'organe mobile (1).

9. Machine électrique selon la revendication 8, **caractérisée en ce que** le dispositif de calcul comprend des moyens d'interpolation permettant d'augmenter la résolution de l'information relative au déplacement du codeur (3).

10. Machine électrique selon l'une quelconque des revendications 1 à 9, **caractérisée en ce qu'**elle comprend plusieurs ensembles bobine (9) - plot (8) par phase électrique.

11. Machine électrique selon l'une quelconque des revendications 1 à 10, **caractérisée en ce que** les bobines (9) sont formées chacune de plusieurs couches d'un circuit imprimé (12) comportant au moins une spire conductrice (13), lesdites spires étant connectées entre elles pour former les bobines (9).

12. Machine électrique selon l'une quelconque des revendications 1 à 11, **caractérisée en ce que** la largeur L_{d} des dents (10) est analogue à la largeur Lₑ des creux (11).

13. Machine électrique selon l'une quelconque des revendications 1 à 12, **caractérisée en ce que** le rapport de la largeur L_{d} des dents (10) et/ou de la largeur Lₑ des creux (11) à N.Lₚ est, à une tolérance de fabrication de +/- 40%, unitaire ou fractionnaire.

14. Machine électrique selon l'une quelconque des revendications 1 à 13, **caractérisé en ce que** les creux (11) présentent une profondeur qui est supérieure ou égale à la largeur L_{d} des dents (10).

15. Machine électrique selon l'une quelconque des revendications 1 à 14, **caractérisée en ce que** le capteur (4) et les bobines (9) sont implantés sur la surface d'un circuit imprimé (12).

16. Machine électrique selon l'une quelconque des revendications 1 à 15, **caractérisée en ce que** le système d'alimentation (2) est apte à utiliser l'information délivrée par le système de détermination pour piloter le déplacement de l'organe mobile (1) et/ou pour contrôler son alimentation électrique par les bobines (9).

## Patentansprüche

1. Elektrische N-Phasen-Maschine, umfassend ein bewegliches Organ (1), das in Bezug auf ein festes Organ verschiebbar montiert ist, ein System zur Bestimmung mindestens einer Information relativ zu der Verschiebung des beweglichen Organs und einem Stromversorgungssystem (2), das durch die Information gesteuert wird, wobei das Bestimmungssystem einen mit dem beweglichen Organ (1) fest verbundenen Encoder (3), der in der Lage ist, ein für seine Verschiebung repräsentatives Signal zu erzeugen, und einen mit dem festen Organ fest verbundenen Sensor (4) umfasst, der in der Lage ist, die Information durch Lesen des durch den Encoder erzeugten Signals zu bestimmen, wobei der Encoder eine Magnetspur (5) aufweist, die aus einer Folge von nₚₚ Paaren von magnetischen Nord- und Südpolen (6) der Breite Lₚ gebildet wird, die angeordnet sind, um ein pseudosinusförmiges Magnetfeld zu liefern, wobei das feststehende Organ einen Anker (7) aus ferromagnetischem Material aufweist, der mit mindestens einer leitenden Spule (9) pro Phase ausgestattet ist, wobei die Spulen elektrisch mit dem Versorgungssystem (2) verbunden sind, indem sie magnetisch an die Spur (5) des Encoders (3) gekoppelt sind, wobei der Anker (7) Noppen (8) aufweist, um die herum jeweils eine Spule (9) angeordnet ist, wobei die Noppen in die Schnittstelle mit dem Encoder (3) vorspringen, indem jede eine freie Oberfläche aufweist, die gegenüber der Magnetspur (5) angeordnet ist, wobei die freie Oberfläche Zähne (10) mit der Breite L_{d} aufweist, die durch Vertiefungen (11) mit der Breite Lₑ auseinanderstehen, wobei die Breiten L_{d} und/oder Lₑ so sind, dass ihr Verhältnis zu N.L_{P} weder gerade, noch umgekehrt gerade ist, um den Magnetfluss zwischen der Spule (9) und dem Encoder (3) zu lenken, damit die elektrische Versorgung der Spulen (9) die Verschiebung des Encoders (3) induziert und/oder dass die Verschiebung des Encoders (3) die elektrische Versorgung der Spulen induziert, wobei die Maschine eine axiale Stapelung einer gedruckten Schaltung (12) auf dem Anker (7) umfasst, um einen Stator zu bilden, wobei der einen Rotor bildende Encoder (3) axial über der gedruckten Schaltung angeordnet ist, um eine Maschine mit axialem Magnetfluss zu bilden, in der der Sensor (4) die von dem Encoder gelieferte Information axial ausliest.

2. Elektrische Maschine nach Anspruch 1, **dadurch gekennzeichnet, dass** der Encoder (3) eine ringförmige Magnetspur (5) aufweist, die fest mit einem beweglichen, drehbar gelagerten Organ (1) verbunden ist, wobei die Spule (9) einer Phase einen geometrischen Mittelpunkt aufweist, der winkelmäßig vom geometrischen Mittelpunkt einer Spule (9) einer anderen Phase um ein ganzzahliges Vielfaches in einem Winkel liegt zwischen:
90°/N.nₚₚ und 270°/N.nₚₚ für N=2; und
270°/N.nₚₚ und 450°/N.nₚₚfür N>2.

3. Elektrische Maschine nach Anspruch 2, **dadurch gekennzeichnet, dass** der geometrische Mittelpunkt einer Spule (9) einer Phase winkelmäßig vom geometrischen Mittelpunkt einer Spule (9) einer anderen Phase um ein ganzzahliges Vielfaches in einem Winkel liegt zwischen:
135°/N.nₚₚ und 225°/N.nₚₚ, insbesondere in der Größenordnung von 180°/N.nₚₚ für N=2; und
315°/N.nₚₚ und 405°/N.nₚₚ, insbesondere in der Größenordnung von 360°/N.nₚₚ, für N>2.

4. Elektrische Maschine nach Anspruch 1, **dadurch gekennzeichnet, dass** der Encoder (3) eine lineare Magnetspur (5) aufweist, die fest mit einem translatorisch montierten beweglichen Organ (1) verbunden ist, wobei die Spule (9) einer Phase einen geometrischen Mittelpunkt aufweist, der linear vom geometrischen Mittelpunkt einer Spule (9) einer anderen Phase um ein ganzzahliges Vielfaches in einem Abstand liegt zwischen:
0,5.Lₚ/N.2nₚₚ und 1,5.Lₚ/N.2n.ₚₚ für N=2; und
Lₚ/N.nₚₚ und 3Lₚ/N.nₚₚ für N>2.

5. Elektrische Maschine nach Anspruch 4, **dadurch gekennzeichnet, dass** die geometrische Mitte einer Spule (9) einer Phase linear von der geometrischen Mitte einer Spule (9) einer anderen Phase um ein ganzzahliges Vielfaches in einem Abstand liegt zwischen:
0,75.Lₚ/N.2nₚₚ und 1,25.Lₚ/N.2nₚₚ , insbesondere in der Größenordnung von Lₚ/N.2nₚₚ für N=2 ; und
1,5Lₚ/N.nₚₚ und 2,5Lₚ/N.nₚₚ, insbesondere in der Größenordnung von 2Lₚ /N.nₚₚ für N>2.

6. Elektrische Maschine nach einem der Ansprüche 1 bis 5, **dadurch gekennzeichnet, dass** die Breite Lₚ jedes der Magnetpole (6) des Encoders (3) zwischen 0,5 und 20 mm liegt.

7. Elektrische Maschine nach einem der Ansprüche 1 bis 6, **dadurch gekennzeichnet, dass** die Anzahl nₚₚ der Paare der Magnetpole (6) des Encoders (3) mindestens gleich 2 ist, insbesondere größer als 6 ist.

8. Elektrische Maschine nach einem der Ansprüche 1 bis 7, **dadurch gekennzeichnet, dass** der Sensor (4) mindestens zwei empfindliche Elemente umfasst, die in Leseabstand zur Magnetspur (5) des Encoders (3) angeordnet sind, wobei die Elemente in der Lage sind, jeweils ein Signal auszusenden, das von dem von der Spur gelieferten Feld abhängt, wobei das Bestimmungssystem umfasst :
- eine Vorrichtung zur Verarbeitung der von den empfindlichen Elementen ausgesendeten Signale, die angeordnet ist, um zwei Signale in Quadratur und mit gleicher Amplitude zu liefern, die jeweils für das Magnetfeld repräsentativ sind, und
- eine Vorrichtung zur Berechnung der Information über die Verschiebung des beweglichen Organs (1) aus den Quadratursignalen.

9. Elektrische Maschine nach Anspruch 8, **dadurch gekennzeichnet, dass** die Vorrichtung zur Berechnung Interpolationsmittel umfasst, die es ermöglichen, die Auflösung der Information über die Bewegung des Encoders (3) zu erhöhen.

10. Elektrische Maschine nach einem der Ansprüche 1 bis 9, **dadurch gekennzeichnet, dass** sie mehrere Baugruppen Spule (9) - Noppen (8) pro elektrischer Phase umfasst.

11. Elektrische Maschine nach einem der Ansprüche 1 bis 10, **dadurch gekennzeichnet, dass** die Spulen (9) jeweils aus mehreren Schichten einer gedruckten Schaltung (12) gebildet werden, die mindestens eine leitende Windung (13) aufweist, wobei die Windungen miteinander verbunden sind, um die Spulen (9) zu bilden.

12. Elektrische Maschine nach einem der Ansprüche 1 bis 11, **dadurch gekennzeichnet, dass** die Breite L_{d} der Zähne (10) analog zur Breite Lₑ der Vertiefungen (11) ist.

13. Elektrische Maschine nach einem der Ansprüche 1 bis 12, **dadurch gekennzeichnet, dass** das Verhältnis der Breite L_{d} der Zähne (10) und/oder der Breite Lₑ der Vertiefungen (11) zu N.Lₚ bei einer Fertigungstoleranz von +/- 40 % einheitlich oder gebrochen ist.

14. Elektrische Maschine nach einem der Ansprüche 1 bis 13, **dadurch gekennzeichnet, dass** die Vertiefungen (11 ) eine Tiefe aufweisen, die größer oder gleich der Breite L_{d} der Zähne (10) ist.

15. Elektrische Maschine nach einem der Ansprüche 1 bis 14, **dadurch gekennzeichnet, dass** der Sensor (4) und die Spulen (9) auf der Oberfläche einer gedruckten Schaltung (12) implantiert sind.

16. Elektrische Maschine nach einem der Ansprüche 1 bis 15, **dadurch gekennzeichnet, dass** das Versorgungssystem (2) in der Lage ist, die vom Bestimmungssystem gelieferte Information zu verwenden, um die Verschiebung des beweglichen Organs (1) zu steuern und/oder seine Stromversorgung durch die Spulen (9) zu kontrollieren.

## Claims

1. An N-phase electric machine comprising a movable member (1) mounted so as to move with respect to a fixed member, a system for determining at least one item of information relating to the movement of said movable member and an electric power supply system (2) which is managed by said item of information, said determination system comprising an encoder (3) secured to the movable member (1) which is able to generate a signal representative of its movement and a sensor (4) secured to the fixed member which is able to determine said item of information by reading the signal generated by said encoder, said encoder having a magnetic track (5) formed by a succession of nₚₚ pairs of North and South magnetic poles (6) with a width Lₚ which are disposed so as to deliver a pseudo-sinusoidal magnetic field, the fixed member having an armature (7) made of a ferromagnetic material which is equipped with at least one conductive coil (9) per phase, said coils being electrically connected to the power supply system (2) while being magnetically coupled to the track (5) of the encoder (3), the armature (7) having pads (8) around which a coil (9) is respectively arranged, with the pads projecting in the interface with the encoder (3) while each having a free surface disposed opposite the magnetic track (5), said free surface having teeth (10) with a width L_{d} spaced apart by hollows (11) with a width Lₑ, the widths L_{d} and/or Lₑ being such that their ratio to N*Lₚ is neither even nor inversely even so as to direct the magnetic flux between the coil (9) and the encoder (3) so that the supply of electric power to the coils (9) causes the encoder (3) to move and/or the movement of the encoder (3) causes electric power to be supplied to said coils, said machine comprising an axial stack of a printed circuit (12) on the armature (7) to form a stator, the encoder (3) forming a rotor being disposed axially above said printed circuit to form an axial magnetic flux machine wherein the sensor (4) axially reads the item of information delivered by said encoder.

2. The electric machine according to claim 1, **characterised in that** the encoder (3) has an annular magnetic track (5) which is secured to a movable member (1) mounted in rotation, the coil (9) of one phase having a geometric centre which is angularly spaced from the geometric centre of a coil (9) of another phase by an integer multiple of an angle comprised between:
90°/N*nₚₚ and 270°/N*nₚₚ for N=2; and
270°/N*nₚₚ and 450°/N*nₚₚ for N>2.

3. The electric machine according to claim 2, **characterised in that** the geometric centre of a coil (9) of one phase is spaced angularly from the geometric centre of a coil (9) of another phase by an integer multiple of an angle comprised between:
135°/N*nₚₚ and 225°/N*nₚₚ, in particular being in the range of 180°/N*nₚₚ, for N=2; and
315°/N*nₚₚ and 405°/N*nₚₚ, in particular being in the range of 360°/N*nₚₚ, for N>2.

4. The electric machine according to claim 1, **characterised in that** the encoder (3) has a linear magnetic track (5) which is secured to a movable member (1) mounted in translation, the coil (9) of a phase having a geometric centre which is spaced linearly from the geometric centre of a coil (9) of another phase by an integer multiple of a distance comprised between:
0.5Lₚ/N*2nₚₚ and 1.5Lₚ/N*2nₚₚ for N=2; and
Lₚ/N*nₚₚ and 3L_{p/}N*nₚₚ for N>2.

5. The electric machine according to claim 4, **characterised in that** the geometric centre of a coil (9) of one phase is spaced linearly from the geometric centre of a coil (9) of another phase by an integer multiple of a distance comprised between:
0.75Lₚ/N*2nₚₚ and 1.25Lₚ/N*2nₚₚ, in particular being in the range of Lₚ/N*2nₚₚ for N=2; and
1.5Lₚ/N*nₚₚ and 2.5Lₚ/N*nₚₚ, in particular being in the range of 2Lₚ/_{N}*nₚₚ for N>2.

6. The electric machine according to any one of claims 1 to 5, **characterised in that** the width Lₚ of each of the magnetic poles (6) of the encoder (3) is comprised between 0.5 and 20 mm.

7. The electric machine according to any one of claims 1 to 6, **characterised in that** the number nₚₚ of pairs of magnetic poles (6) of the encoder (3) is at least equal to 2, in particular being greater than 6.

8. The electric machine according to any one of claims 1 to 7, **characterised in that** the sensor (4) comprises at least two sensitive elements disposed at a reading distance from the magnetic track (5) of the encoder (3), each of said elements being adapted to emit a signal which is a function of the field delivered by said track, the determination system comprising:
- a device for processing the signals emitted by the sensitive elements which is arranged so as to supply two signals in quadrature and with the same amplitude each representative of the magnetic field; and
- from said signals in quadrature, a device for computing the item of information relating to the movement of the movable member (1).

9. The electric machine according to claim 8, **characterised in that** the computer device comprises interpolation means allowing increasing the resolution of the item of information relating to the movement of the encoder (3).

10. The electric machine according to any one of claims 1 to 9, **characterised in that** it comprises several coil (9) - pad (8) assemblies per electric phase.

11. The electric machine according to any one of claims 1 to 10, **characterised in that** each of the coils (9) is formed of several layers of a printed circuit (12) including at least one conductive turn (13), said turns being connected together to form the coils (9).

12. The electric machine according to any one of claims 1 to 11, **characterised in that** the width L_{d} of the teeth (10) is similar to the width Lₑ of the hollows (11).

13. The electric machine according to any one of claims 1 to 12, **characterised in that** the ratio of the width L_{d} of the teeth (10) and/or of the width Lₑ of the hollows (11) to N*Lₚ is, within a manufacturing tolerance of +/-40%, unitary or fractional.

14. The electric machine according to any one of claims 1 to 13, **characterised in that** the hollows (11) have a depth which is larger than or equal to the width L_{d} of the teeth (10).

15. The electric machine according to any one of claims 1 to 14, **characterised in that** the sensor (4) and the coils (9) are installed at the surface of a printed circuit (12).

16. The electric machine according to any one of claims 1 to 15, **characterised in that** the power supply system (2) is able to use the item of information delivered by the determination system to drive the movement of the movable member (1) and/or to control its electric power supply via the coils (9).
